# EUROPÄISCHE PATENTSCHRIFT

(11) **EP 2 402 829 B1**
(45) Veröffentlichungstag und Bekanntmachung des Hinweises auf die Patenterteilung: **28.08.2013**
(21) Anmeldenummer: 10006848.5
(22) Anmeldetag: 02.07.2010
(51) Int. Cl.: G05B 19/042, F15B 13/08

(54) **Modulanordnung und Verfahren zum Betreiben einer Modulanordnung**
Modular assembly and method for operating a modular assembly
Agencement de module et procédé de fonctionnement d'un agencement de module

(43) Veröffentlichungstag der Anmeldung: 04.01.2012
(73) Patentinhaber: FESTO AG & Co. KG, 73734 Esslingen (DE)
(72) Erfinder: Gienger, Bernd, 73235 Weilheim (DE); Gräff, Uwe, 73760 Ostfildern (DE)
(74) Vertreter: Kocher, Mark Werner

(56) Entgegenhaltungen:
- EP-A1- 1 710 447
- EP-A1- 2 026 156
- DE-A1-102007 015 111
- US-A1- 2004 089 354

## Beschreibung

Die Erfindung betrifft eine Modulanordnung mit längs einer Reihenrichtung aneinander gereihten Modulen, die wenigstens teilweise als Ventilmodule ausgebildet sind, sowie mit einer Steuereinrichtung, die zur Kommunikation mit einer Maschinensteuerung über ein Bussystem und zur Bereitstellung von Steuersignalen an die Module ausgebildet ist, wobei die Ventilmodule in wenigstens zwei Ventilmodulgruppen zusammengefasst sind und wenigstens einer Ventilmodulgruppe ein Drucksteuermittel zugeordnet ist, das in Abhängigkeit von einem Steuersignal der Steuereinrichtung zwischen einem ersten und wenigstens einem zweiten Druckniveau umschaltbar ist, um eine Druckbeaufschlagung der zugeordneten Ventilmodulgruppe zu beeinflussen. Die Erfindung betrifft weiterhin ein Verfahren zum Betreiben einer Modulanordnung.

Aus der EP 1 710 447 B1 ist ein elektrofluidisches Steuergerät mit mehreren in einer Aufreihungsrichtung aufeinanderfolgend angeordneten und wenigstens teilweise mindestens ein Steuerventil aufweisenden, elektrisch betriebenen Arbeitsmodulen bekannt. Dabei sind die Arbeitsmodule gemeinsam an einen in der Aufreihungsrichtung verlaufenden elektrischen Verkettungsstrang angeschlossen. Über den Verkettungsstrang werden die für die Ansteuerung der Arbeitsmodule verwendeten Steuersignale übermittelt und die Arbeitsmodule mit einer ersten Betriebsspannung versorgt. Die erste Betriebsspannung ist über einen an einem Anschlussmodul vorgesehenen und mit dem Verkettungsstrang verbundenen Basisanschluss einspeisbar. Darüber hinaus ist vorgesehen, mindestens ein einen elektrischen Einspeiseanschluss aufweisendes Einspeisemodul zur Einspeisung mindestens einer weiteren Betriebsspannung vorzusehen, das beabstandet zu dem Anschlussmodul in den Verlauf des Verkettungsstranges einschaltbar oder eingeschaltet ist. Mit Hilfe der wenigstens zwei Einspeisemodule können unterschiedliche Betriebsspannungszonen in dem Steuergerät verwirklicht werden. Dies ermöglicht es beispielsweise in einem Notfall, einzelne Ventilgruppen von der Betriebsspannung abzuschalten und an einem Weiterbetrieb zu hindern, während andere Ventilgruppen weiterbetrieben werden können.

Aus der EP 2 026 156 B1 ist eine Modulanaordnung mit in einer Reihenrichtung aneinandergereihten Modulen, die wenigstens teilweise als Ventilmodule ausgebildet sind, bekannt. Dabei ist wenigstens ein Modul als Steuermodul ausgebildet und mit den anderen Modulen über quer durch diese Module verlaufende Steuer- und/oder Sensorleitungen verbunden. Wenigstens ein Modul ist als Sicherheitsmodul ausgebildet und weist Schaltmittel für die durchlaufenden Spannungsversorgungsleitungen auf. Dem Sicherheitsmodul kann ein Sicherheitsventil zugeordnet sein, das als Entlüftungs- und/oder Sperrventil für die Ventilmodule ausgebildet ist und das im Notfall eine teilweise Entlüftung der Modulanordnung ermöglicht.

Die Aufgabe der Erfindung besteht darin, eine Modulanordnung bereitzustellen, die aus einem Betriebszustand in einen energetisch optimierten Zustand gebracht werden kann.

Diese Aufgabe wird für eine Modulanordnung der eingangs genannten Art mit den Merkmalen des Anspruchs 1 gelöst. Hierbei ist vorgesehen, dass in der Steuereinrichtung ein Energiespar-Signalmuster für eine Umschaltung wenigstens eines Drucksteuermittels aus einem Betriebszustand in wenigstens einen Energiesparzustand gespeichert ist.

Das Energiespar-Signalmuster kann derart ausgebildet sein, dass das Drucksteuermittel die Druckbeaufschlagung der zugeordneten Ventilmodulgruppe ausgehend von einer ersten, für den Betriebszustand vorgesehenen Druckbeaufschlagung auf eine zweite, für den Energiesparzustand vorgesehenen Druckbeaufschlagung absenkt. Entweder findet hierzu eine Reduzierung der Druckbeaufschlagung ausgehend vom Betriebszustand oder eine vollständige Abschaltung der Druckbeaufschlagung, gegebenenfalls kombiniert mit einer Entlüftung der zugehörigen, an die jeweilige Ventilmodulgruppe angeschlossenen fluidisch betreibbaren Komponenten statt. Vorzugsweise sind derjenigen Ventilmodulgruppe, die mit dem Drucksteuermittel fluidisch gekoppelt ist, lediglich derartige Verbraucher zugeordnet, bei denen eine Absenkung des von der Ventilmodulgruppe bereitgestellten Fluiddrucks nicht zu unerwünschten Fehlfunktionen führt. Beispielsweise kann es sich hierbei um Aktoren handeln, die während des Energiesparzustands in einem Ruhezustand verharren oder selbsttätig eine vorgebbare Energiesparstellung einnehmen, ohne dass hierdurch eine Gefährdung hervorgerufen wird. Hierdurch kann der Verbrauch von druckbeaufschlagtem Fluid während des Energiesparzustands reduziert werden.

Vorteilhafte Weiterbildungen der Erfindung sind Gegenstand der Unteransprüche.

Zweckmäßig ist es, wenn in der Steuereinrichtung wenigstens ein Fehlerfallsignalmuster für eine Umschaltung wenigstens eines Drucksteuermittels aus einem Betriebszustand in einen Sicherheitszustand gespeichert ist. Bei dem Sicherheitszustand steht im Vordergrund, dass die Ventilmodule der Ventilmodulgruppen eine möglichst rasche Abschaltung der angekoppelten Komponenten bzw. Verbraucher bewirken können, ohne dass die entsprechenden Verbraucher, beispielsweise Aktoren oder Spann- bzw. Saugmittel, in sicherheitskritische Zustände geraten. Somit unterscheidet sich der Sicherheitszustand zum einen hinsichtlich der Zielsetzung von dem Energiesparzustand, da bei Sicherheitszustand eine möglichst rasche Abschaltung in einen möglichst sichern Zustand gefordert ist, während beim Energiesparzustand ein sicherer Zustand mit möglichst geringem Energieverbrauch eingenommen werden soll, jedoch der Faktor Zeit keine übergeordnete Rolle spielt. Zum anderen kann vorgesehen sein, dass wenigstens ein Drucksteuermittel im Sicherheitszustand auf einen vom Energiesparzustand abweichenden Druck eingestellt wird, um beispielsweise bestimmte Ventilmodulgruppen vollständig abzuschalten, die im Energiesparzustand zumindest auf einem niedrigen Druckniveau gehalten werden, oder in umgekehrter Weise bestimmte Ventilmodulgruppen auf einer höheren Druckbeaufschlagung zu belassen, um im Fehlerfall deren angeschlossene Verbraucher nicht in kritische Zustände zu bringen, während diese beim Energiesparzustand zunächst in geordneter Weise in eine sichere und energiesparende Stellung gebracht werden können.

Bei einer vorteilhaften Weiterbildung der Erfindung ist vorgesehen, dass wenigstens ein Energiesparsignalmuster und/oder wenigstens ein Fehlerfallsignalmuster Steuersignale zur Ansteuerung von Ventilmodulen und/oder elektrischen Modulen umfasst, um diese aus einem Betriebszustand in einen Energiesparzustand oder in einen Sicherheitszustand umzuschalten. Das jeweilige Energiesparsignalmuster und/oder Fehlerfallsignalmuster dient bei dieser Weiterbildung der Erfindung somit nicht nur zur Beeinflussung der von den Drucksteuermitteln vorgegebenen Druckniveaus in den Ventilmodulgruppen, sondern auch gezielten Ansteuerung einzelner Module, insbesondere von Ventilmodulen und/oder von elektrischen Modulen. Dadurch sollen diese in einen vorgebbaren Zustand umgeschaltet werden, in dem eine vorteilhafte Funktionalität der Modulanordnung für den jeweiligen Zustand gewährleistet ist. Beispielsweise kann vorgesehen sein, zum einnehmen des Energiesparzustands ausgewählte elektrische Module vollständig abzuschalten, während andere elektrische Module weiterhin mit einer entsprechenden elektrischen Versorgungsspannung versorgt werden. Bei den Ventilmodulen kann beispielsweise vorgesehen sein, dass diese vor Absenkung des Druckniveaus mittels des Drucksteuermittels noch in eine vorgegebene Ventilstellung gebracht werden, um die daran angeschlossenen Komponenten bzw. Verbraucher ebenfalls in eine vorgebbare Stellung oder einen vorgebbaren Zustand zu überführen. In dem eingenommen Zustand ist die anschließende Absenkung des Druckniveaus mit Hilfe des Drucksteuermittels unschädlich, so dass ein besonders vorteilhaftes Energiesparverhalten im Energiesparzustand erreicht werden kann. Möglicherweise umfasst das Energiesparsignalmuster und/oder das Fehlerfallsignalmuster zeitlich nacheinander abfolgende Untermuster, um die vorstehend beschriebene kaskadierte Abschaltung oder Umschaltung der zugeordneten Module bewirken zu können.

Bei einer Weiterbildung der Erfindung ist vorgesehen, dass die Steuereinrichtung derart für eine Auswertung von Anweisungen des Bussystems ausgebildet ist, dass bei Eintreffen eines Energiesparsignals eine Bereitstellung des Energiesparsignalmusters und/oder bei Detektion von Kommunikationsstörungen im Bussystem eine Bereitstellung des Fehlerfallsignalmusters bewirkt wird. Für den normalen Betriebszustand der Modulanordnung ist vorgesehen, dass die Steuereinrichtung über das Bussystem gemäß dem gewählten Busprotokoll codierte Anweisungen für die einzelnen Module der Modulanordnung von der Maschinensteuerung erhält. Diese Anweisungen werden von der Steuereinrichtung in entsprechende Steuersignale für die einzelnen Module umsetzt und über längs der Modulanordnung durch einen Teil oder sämtliche der Module durchgeschleifte Steuerleitungen an die anzusprechenden Module weiterleitet. Vorzugsweise sind in dem Betriebszustand sämtliche Ventilmodule mit dem vollen Betriebsdruck, wie er über eine Versorgungsleitung bereitgestellt wird, beaufschlagt und die Drucksteuermittel sind deaktiviert. Für die Aktivierung des Energiesparzustands ist vorgesehen, dass die Maschinensteuerung über das Bussystem lediglich ein allgemeines Energiesparsignal bereitstellt, das erst in der Steuereinrichtung durch Auslesen des Energiesparsignalmusters aus einem internen Speicher zur gezielten Ansteuerung der Drucksteuermittel und gegebenenfalls der Module, insbesondere der Ventilmodule und/oder der elektrischen Module, führt. Beispielsweise werden durch das von der Maschinensteuerung ausgegebene Energiesparsignal neben der Modulanordnung auch andere Busteilnehmer, beispielsweise Steuergeräte für rein elektrisch betriebene Komponenten wie Antriebsmotoren, angesprochen. Somit ist es für die Umschaltung zwischen dem Betriebszustand und dem Energiesparzustand nicht erforderlich, von der Maschinensteuerung gezielt Steuersignale an die einzelnen Module über das Bussystem zu übertragen. Vielmehr ermöglicht das zentrale Energiesparsignal die Aktivierung des Energiesparzustands über das wenigstens eine in der Steuereinrichtung hinterlegte Energiesparsignalmuster. Hinsichtlich der Auslösung des Sicherheitszustands ist die Steuereinrichtung derart eingerichtet, dass sie anhand von möglicherweise im vorgegebenen Busprotokoll vorgesehenen Prüfroutinen überprüft, ob die von der Maschinensteuerung über das Bussystem übertragenen Anweisungen an die Steuereinrichtung plausibel sind. Bei Vorliegen von fehlerhaften Anweisungen wird die Ausgabe des Fehlerfallsignalmusters bewirkt. Dabei kann auch bei dem Fehlerfallsignalmuster lediglich eine Ansteuerung der Drucksteuermittel oder gegebenenfalls zusätzlich eine Ansteuerung einzelner Module, insbesondere von Ventilmodulen und/oder elektrischen Modulen vorgesehen sein, um einen sicheren Zustand der fluidtechnischen und/oder elektrischen Komponenten zu gewährleisten, die mit der Modulanordnung verknüpft und von dieser angesteuert werden.

Bevorzugt ist die Steuereinrichtung zur Kommunikation mit einer Maschinensteuerung mittels eines Ethernet-basierten Bussystems, vorzugsweise eines Bussystems gemäß IEC 61784-2, insbesondere Profinet, ausgebildet. Hierdurch ist eine zuverlässige, insbesondere echtzeitfähige, Übertragung von Anweisungen der Maschinensteuerung an die Steuereinrichtung und eine gegebenenfalls notwendige Rückübertragung von Signalen der Steuereinrichtung an die Maschinensteuerung möglich.

Vorteilhaft ist es, wenn das Drucksteuermittel als Modul zur Aufreihung an die Ventilmodulgruppe ausgebildet ist. Dies ermöglicht eine kompakte Integration des Drucksteuermittels in die Modulanordnung, wobei das Drucksteuermittel vorteilhafter Weise sowohl in elektrischer als auch in fluidischer Hinsicht gleichartig wie die übrigen Module, insbesondere die Ventilmodule, in die Modulanordnung eingeschleift ist. Bevorzugt kann das Drucksteuermittel an einer beliebigen Stelle in zwischen benachbarte Ventilmodule eingesetzt werden, um Ventilmodulgruppen bedarfsabhängig in fluidischer Hinsicht voneinander zu trennen.

Zweckmäßig ist es, wenn die einer Ventilmodulgruppe zugehörigen Ventilmodule jeweils unmittelbar nebeneinander angeordnet sind. Hierdurch ist eine besonders einfache Beeinflussung des für die jeweilige Ventilmodulgruppe durch entsprechende Ansteuerung des Drucksteuermittels vorgesehenen Druckniveaus für den Energiesparzustand und/oder den Sicherheitszustand möglich.

Vorteilhaft ist es, wenn benachbarte Ventilmodulbaugruppen jeweils durch ein Drucksteuermittel baulich voneinander getrennt sind. Hierbei dient das Drucksteuermittel nicht nur zur fluidischen, sondern auch zur mechanischen Trennung benachbarter Ventilmodulbaugruppen.

Die Aufgabe der Erfindung wird auch durch ein Verfahren zum Betreiben einer Modulanordnung mit den folgenden Schritten gelöst: Auswerten von Anweisungen, die von einer Maschinensteuerung über ein Bussystem bereitgestellt werden, durch eine Steuereinrichtung sowie Ansteuerung von Modulen, insbesondere Ventilmodulen, die zu wenigstens zwei Ventilmodulgruppen zusammengefasst sind, durch die Steuereinrichtung, wobei wenigstens einer Ventilmodulgruppe ein Drucksteuermittel zugeordnet ist, das in Abhängigkeit von einem Steuersignal der Steuereinrichtung zwischen einem ersten und wenigstens einem zweiten Druckniveau umschaltbar ist, in Abhängigkeit von den bereitgestellten Anweisungen; Detektieren eines über das Bussystem bereitgestellten Energiesparsignals und Ansteuern des wenigstens einen Drucksteuermittels mittels eines Energiesparsignalmusters bei Vorliegen des Energiesparsginals, um für wenigstens eine Ventilmodulgruppe eine Absenkung eines Fluiddrucks und somit einem Energiesparzustand herbeizuführen, Detektieren von Fehlfunktionen des Bussystems und Ansteuern des wenigstens einen Drucksteuermittels mittels eines Fehlerfallsignalmusters bei Vorliegen einer Bussystemfehlfunktion, um für wenigstens eine Ventilmodulgruppe eine Absenkung eines Fluiddrucks und somit einen Sicherheitszustand herbeizuführen.

Während eines normalen Betriebszustands werden von der Maschinensteuerung über das Bussystem gemäß dem gewählten Busprotokoll kodierte Anweisungen oder Bussignale an die Steuereinrichtung übertragen, die heraus entsprechend der internen Kommunikation in der Modulanordnung kodierte Steuersignale bereitstellt. Die Steuersignale werden zur Ansteuerung der Module, insbesondere der Ventilmodule und der elektrischen Module, genutzt. Die Steuereinrichtung wertet permanent oder in regelmäßigen Abständen die über das Bussystem bereitgestellten Anweisungen auf das Vorliegen eines Energiesparsignals aus, das von der Maschinensteuerung zentral ausgegeben werden kann und das für die Ansteuerung sowohl der Steuereinrichtung als auch anderer mit dem Bussystem verbundener Komponenten, beispielsweise der Steuerungen elektrischer Antriebe, ausgebildet ist. Sobald die Steuereinrichtung das Vorliegen eines derartigen Energiesparsginals detektiert, nimmt sie die Bereitstellung des vorzugsweise in der Steuereinrichtung hinterlegten, wenigstens einen Energiesparsignalmusters an die Drucksteuermittel und gegebenenfalls an die übrigen Module, insbesondere die Ventilmodule und/oder die elektrischen Module, der Modulanordnung vor. Zudem ist die Steuereinrichtung derart ausgebildet, dass sie Kommunikationsstörungen im Bussystem und/oder Fehlfunktionen der Maschinensteuerung detektieren kann und bei Vorliegen derartiger Störungen ein Fehlerfallsignalmuster an die Modulanordnung ausgeben kann, um die mit der Modulanordnung, insbesondere mit den Ventilmodulen und/oder mit den elektrischen Modulen verbundenen Komponenten in einen sicheren Zustand zu bringen. Somit können Gefährdungen durch diese Komponenten zumindest weitgehend, vorzugsweise vollständig, ausgeschlossen werden. Hierzu ist ebenfalls eine zumindest teilweise Absenkung von Druckniveaus für die verschiedenen Ventilmodulgruppen vorgesehen, wobei sich diese Druckniveaus zum Teil erheblich von den für den Energiesparzustand vorgesehenen Druckniveaus unterscheiden können.

Vorteilhaft ist es, wenn das Energiesparsignal als vorgebbares Triggersignal, vorzugsweise als vorgebbares Datenwort, insbesondere als vorgebbares Datenbit innerhalb eines Datenworts, über das Bussystem übertragen wird und die Freigabe des wenigstens einen Energiesparsignalmusters durch die Steuereinrichtung bewirkt. Dadurch ist es nicht erforderlich, dass die Maschinensteuerung detaillierte Anweisungen über das Bussystem an die Steuereinrichtung der jedes der Module, insbesondere für jedes der Ventilmodule und/oder der elektrischen Module und/oder der Drucksteuermittel überträgt. Vielmehr reicht es aus, wenn die Maschinensteuerung ein vorgebbares Datenwort gemäß dem ausgewählten Busprotokoll über das Bussystem an die Steuereinrichtung überträgt, wobei das Datenwort zur Auslösung der Freigabe des wenigstens einen Energiesparsignalmusters führt. Vorteilhaft ist es, wenn das Triggersignal für das Energiesparsignal als Teilmenge des Datenworts, das beispielsweise als 16-Bit-Datenwort ausgebildet sein kann, ausgeführt ist.

Bei einer Weiterbildung der Erfindung ist vorgesehen, dass durch das Energiesparsignalmuster und/oder durch das Fehlerfallsignalmuster Steuersignale an die Ventilmodule und/oder die elektrischen Module ausgegeben werden, um für den Energiesparzustand bzw. für den Sicherheitszustand vorgebbare Ventilstellungen der Ventilmodule und/oder Schaltzustände der elektrischen Module einzustellen. Die Steuersignale können an sämtliche Module der Modulanordnung bereitgestellt werden oder lediglich an einen ausgewählten Teil der Modulanordnung. Bevorzugt sind die Steuersignale derart ausgebildet, dass die damit beaufschlagten Module in einen vorgebbaren, vorzugsweise eindeutigen, Zustand, insbesondere Schaltzustand, gebracht werden können.

Zweckmäßig ist es, wenn für den Betriebszustand der Module über das Bussystem gemäß einem vorgebbaren Busprotokoll Anweisungen für eine diskrete Ansteuerung individueller Module, insbesondere Ventilmodule und/oder elektrischer Module, übertragen werden.

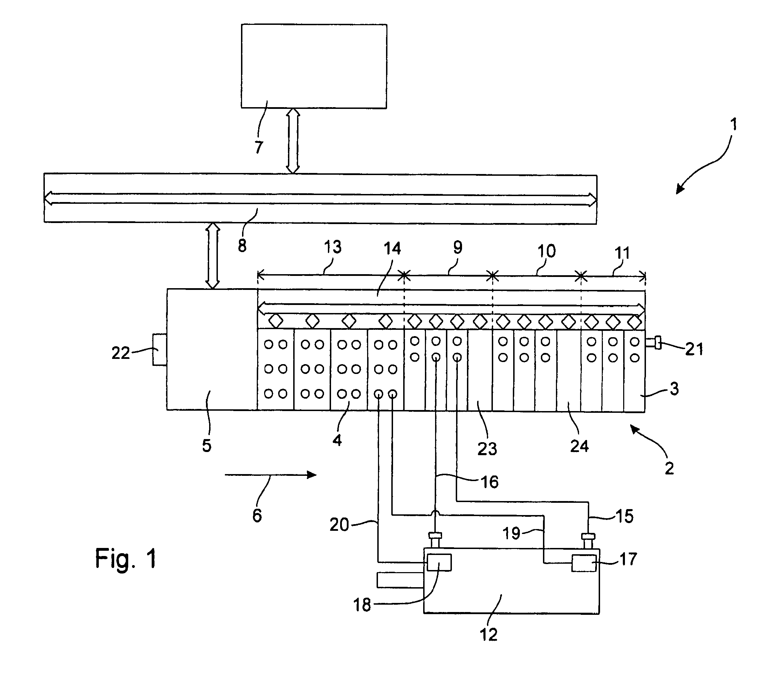

Eine vorteilhafte Ausführungsform der Erfindung ist in der Zeichnung dargestellt.

In der einzigen Figur ist eine Modulanordnung 1 dargestellt, die aus einer Vielzahl von aneinandergereihten Modulen 2 aufgebaut ist. Bei den Modulen 2 kann es sich exemplarisch um Ventilmodule 3 und elektrische Module 4 handeln, die zur Steuerung von fluidischen Strömen, insbesondere Druckluftströmen bzw. elektrischen Strömen und/oder Spannungen und gegebenenfalls zur Verarbeitung von elektrischen Signalen, die insbesondere von Sensoreinrichtungen bereitgestellt werden, ausgebildet sind. Die Module 2 weisen exemplarisch in einer nicht dargestellten, senkrecht zu einer Reihenrichtung 6 ausgerichteten Querschnittsebene jeweils den gleichen Querschnitt auf. Die Erstreckung der Module 2 längs der Reihenrichtung 6 kann entsprechend dem jeweiligen Raumbedarf des entsprechenden Moduls variieren.

Zur Ansteuerung oder Regelung der Module 2 ist eine Steuereinrichtung 5 vorgesehen, die längs der Reihenrichtung 6, beispielsweise in einem Endbereich der Modulanordnung 1, an eines der Module 2 angrenzt. Die Steuereinrichtung 5 ist für eine Datenkommunikation mit einer Maschinensteuerung 7 über ein Bussystem 8 ausgebildet. Vorzugsweise ist eine bidirektionale Kommunikation zwischen der Maschinensteuerung 7 und Steuereinrichtung 5 über das Bussystem 8 vorgesehen. Eine Übertragung von Anweisungen von der Maschinensteuerung 7 an die Steuereinrichtung 5 sowie von Sensorsignalen von der Steuereinrichtung 5 an die Maschinensteuerung 7 erfolgt gemäß einem vorgebbaren Busprotokoll, insbesondere entsprechend einem Busprotokoll gemäß IEC 16784-2, beispielsweise Profinet.

An dem Bussystem 8 können weitere, nicht dargestellte Busteilnehmer in elektrisch kommunizierender Verbindung angebracht sein, die wie die Steuereinrichtung 5 mit der Maschinensteuerung 7 in Datenaustausch stehen und Anweisungen gemäß dem vorgegebenen Busprotokoll erhalten bzw. Daten mit der Maschinensteuerung 7 austauschen. Der Datenaustausch zwischen der Maschinensteuerung 7 und dem Bussystem 8 ist durch einen bidirektionalen Pfeil angedeutet. Der Datenfluss in dem Bussystem 8 ist ebenfalls durch einen bidirektionalen Pfeil angedeutet, gleiches gilt für den Datenaustausch zwischen Bussystem 8 und Steuereinrichtung 5. Die örtliche Trennung von Maschinensteuerung 7 und Bussystem 8 gemäß der einzigen Figur kann in der Praxis aufgehoben sein.

Ein Teil der Module 2, beispielsweise die Ventilmodule 3, sind in nachstehend näher beschriebenen Ventilmodulgruppen 9, 10 und 11 zusammengefasst. Die elektrischen Module 4 sind zu einer Steuermodulgruppe 13 zusammengefasst. Eine Kommunikation zwischen der Steuereinrichtung 5 und den Modulen 2 findet über eine schematisch dargestellte, interne Kommunikationsleitung 14 statt, die beispielsweise als Ethernet-basiertes Bussystem oder als Direktverdrahtung der einzelnen Module 2 mit der Steuereinrichtung 5 ausgebildet sein kann. Ein Datenaustausch zwischen der Steuereinrichtung 5 und den Modulen ist durch Pfeile symbolisiert. Vorzugsweise ist jedes der Module für einen bidirektionalen Datenaustausch mit der Steuereinrichtung 5 ausgebildet. In einer nicht dargestellten Ausführungsform kann auch vorgesehen werden, dass ein Teil der Module lediglich für einen unidirektionalen Datenempfang der von der Steuereinrichtung 5 bereitgestellten Signale ausgebildet ist.

Exemplarisch ist ein Aktor 12, der beispielsweise als pneumatischer Zylinder ausgeführt sein kann, über Versorgungsleitungen 15, 16 fluidisch mit zwei benachbart zueinander angeordneten Ventilmodulen 3 verbunden. Exemplarisch handelt es sich bei den mit dem Aktor 12 gekoppelten Ventilmodulen 3 um 3/2-Wegeventile mit elektrischer Ansteuerung. Die Ventilmodule 3 ermöglichen damit bei entsprechender Ansteuerung durch die Steuereinrichtung 5 eine Belüftung bzw. Entlüftung der beiden nicht näher bezeichneten Arbeitsräume des Zylinders und damit das Hervorrufen einer Bewegung der Kolbenstange. Am Aktor 12 angebrachte Sensoren 17 und 18, bei denen es sich beispielsweise um Endlagensensoren handeln kann, sind über Sensorleitungen 19, 20 mit einem der elektrischen Module 4 verbunden. Dort erfolgen beispielsweise eine Verarbeitung der Sensorsignale und eine Weiterleitung an die Steuereinrichtung 5.

An einer der Steuereinrichtung 5 entgegengesetzten Stirnseite der Modulanordnung 1 ist ein pneumatischer Versorgungsanschluss 21 vorgesehen, durch den eine Druckbeaufschlagung der Ventilmodule 3 ermöglicht wird. Vorzugsweise sind die Ventilmodule 3 durch einen längs der Reihenrichtung 6 erstreckten, nicht näher dargestellten, internen Fluidkanal kommunizierend miteinander verbunden. An der Steuereinrichtung 5 ist ein elektrischer Versorgungsanschluss 22 angeordnet. Über den elektrischen Versorgungsanschluss 22 können die Steuereinrichtung 5, die elektrischen Module 4 und gegebenenfalls auch die Ventilmodule 3 mit elektrischer Energie versorgt werden.

Die Ventilmodulgruppen 9 bis 11 sind jeweils durch Drucksteuermittel 23, 24 baulich voneinander getrennt. Die Drucksteuermittel 23, 24 weisen im Wesentlichen die gleiche Bauform, insbesondere eine in Reihenrichtung gleiche Profilierung, wie die Ventilmodule 3 und die elektrischen Module 4 auf. Die Drucksteuermittel 23, 24 sind exemplarisch jeweils endseitig an der derjenigen Stirnseite der jeweiligen Ventilmodulgruppe 9, 10 angeordnet, die dem pneumatischen Versorgungsanschluss 21 zugewandt ist. Jedes Drucksteuermittel 23, 24 ist für eine Beeinflussung des am pneumatischen Versorgungsanschluss 21 angelegten und über die nicht dargestellte interne Fluidleitung an die Module 2 bereitgestellten Fluiddrucks für die jeweils nachfolgenden Ventilmodule 3 der zugeordneten Ventilmodulgruppe 9, 10 eingerichtet.

Die Drucksteuermittel 23, 24 sind ebenso wie die übrigen Module 2 über die interne Kommunikationsleitung 14 mit der Steuereinrichtung 5 verbunden. Vorzugsweise ist eine bidirektionale Kommunikation zwischen den Drucksteuermitteln 23, 24 und der Steuereinrichtung 5 vorgesehen, so dass die Drucksteuermittel 23, 24 beispielsweise ein Statussignal bei Erreichen eines vorgebbaren Druckniveaus in den zugeordneten Ventilmodulen 3 an die Steuereinrichtung 5 ausgeben kann.

In einen Betriebszustand werden von der Maschinensteuerung 7 über das Bussystem 8 gemäß dem gewählten Busprotokoll kodierte Anweisungen, insbesondere in Form von Datenworten, übertragen bzw. Rückmeldungen, insbesondere Sensorwerte, von der Steuereinrichtung 5 empfangen. Dabei kann vorgesehen sein, dass die Maschinensteuerung 7 über die Steuereinrichtung 5 eine selektive Ansteuerung der Ventilmodule 3 und gegebenenfalls der elektrischen Module 4 über entsprechende selektive Anweisungen innerhalb des vorgegebenen Busprotokolls vornimmt. Hierzu werden über das Bussystem 8 gezielt Anweisungen für die einzelnen Ventilmodule 3 an die Steuereinrichtung 5 übertragen. Diese Anweisungen werden von der Steuereinrichtung 5 decodiert und in Steuersignale für die interne Kommunikationsleitung 14 umgesetzt sowie in diese einspeist, um das entsprechende Ventilmodul 3 anzusteuern.

In ähnlicher Weise werden Sensorsignale, die beispielsweise von den Sensoren 17, 18 über die Sensorleitungen 19, 20 in das elektrische Modul 4 eingespeist werden, über die Kommunikationsleitung 14 an die Steuereinrichtung 5 weitergeleitet, bei hierzu gegebenenfalls ein internes Busprotokoll, das vom Busprotokoll auf dem Bussystem 8 abweichen kann, eingesetzt werden kann. In der Steuereinrichtung 5 werden die Sensorsignale gegebenenfalls aufbereitet und anschließend in das Busprotokoll des Bussystems 8 umgesetzt. Nachfolgend werden die Sensorsignale über das Bussystem 8 zur weiteren Verarbeitung an die Maschinensteuerung 7 weitergeleitet.

Die Steuereinrichtung 5 ist derart eingerichtet, dass sie die von der Maschinensteuerung 7 über das Bussystem bereitgestellten Anweisungen auch auf das Vorhandensein von Energiesparsignalen auswerten kann. Bei dem Energiesparsignal handelt es sich vorzugsweise nicht um eine gezielte Anweisung an eine oder mehrere der Module 2, sondern um ein an eine Vielzahl von nicht näher dargestellten, die Steuereinrichtung 5 umfassenden Busteilnehmer. Beispielsweise kann das Energiesparsignal als Datenwort oder als Teil eines Datenworts gemäß dem für das Bussystem 8 vorgegebenen Busprotokoll ausgebildet sein. Das Energiesparsignal ist ein Schaltsignal oder Triggersignal für die Steuereinrichtung 5 und löst dort einen vorgebbaren internen Ablauf aus.

Beispielsweise kann die Steuereinrichtung 5 bei Eintreffen eines Energiesparsignals zunächst eine Plausibilitätsprüfung vornehmen, ob zum gegenwärtigen Zeitpunkt ein Einnehmen eines Energiesparzustands möglich ist oder ob zunächst noch das Ende eines Arbeitszyklus oder das Erreichen eines vorgebbaren Zustands abgewartet oder herbeigeführt werden muss.

Jedenfalls führt das Eintreffen des Energiesparsignals zum Abruf wenigstens eines in einem nicht näher dargestellten elektronischen Speicherbereich der Steuereinrichtung 5 abgelegten Energiesparsignalmusters. Das Energiesparsignalmuster wird gegebenenfalls durch die Steuereinrichtung verarbeitet und anschließend über die interne Kommunikationsleitung 14, insbesondere als Folge von Einzelbefehlen für die der Steuereinrichtung 5 zugeordneten Module 2, an wenigstens eines der Drucksteuermittel 23, 24 und gegebenenfalls an wenigstens ein weiteres Modul 2 ausgegeben.

Exemplarisch kann das Energiesparsignalmuster derart ausgebildet sein, dass wenigstens eines der Drucksteuermittel 23, 24 derart angesteuert wird, dass die zugeordnete Ventilmodulgruppe 9, 10 nunmehr mit einem geringeren Fluiddruck beaufschlagt wird, als dies im vorausgegangenen Betriebszustand der Modulanordnung 1 der Fall war. Hierbei kann entweder eine teilweise Absenkung des Druckniveaus oder eine vollständige Entlüftung der zugehörigen Ventilmodulgruppe 9, 10 vorgesehen sein. Die an die Ventilmodule 3 der jeweiligen ventilmodulgruppe 9, 10 angeschlossenen Komponenten, beispielsweise der Aktor 12, werden somit im Energiesparzustand nur noch mit einem reduzierten Druck versorgt oder eventuell gänzlich entlüftet. Hierdurch kann ein, insbesondere durch Leckageverluste in den Ventilmodulen 3 und/oder den Aktoren 12 sowie den Versorgungsleitungen 15, 16 bewirkter, Verbrauch von druckbeaufschlagtem Fluid reduziert oder vollständig ausgeschaltet werden.

Möglicherweise sind in der Steuereinrichtung 5 unterschiedliche Energiesparsignalmuster abgelegt. Somit kann beispielsweise bei Eintreffen des über das Bussystem 8 in die Steuereinrichtung 5 eingespeisten Energiesparsignals, das als Triggersignal wirkt, in Abhängigkeit von einem durch die Steuereinrichtung 5 anhand von Zustandssignalen, insbesondere von Sensorsignalen, eine Auswahl eines vorteilhaften Energiesparsignalmusters vorgenommen werden. Anschließend erfolgt dann die Ansteuerung der Drucksteuermittel 23, 24 und gegebenenfalls der Ventilmodule 3 und/oder der elektrischen Module 4 gemäß dem ausgewählten Energiesparmuster. Beispielsweise kann das auszuwählende Energiesparsignalmuster davon abhängig gemacht werden, ob eine Greifeinrichtung zum Zeitpunkt des Eintreffens des Energiesparsignals gerade ein Werkstück gegriffen hat oder nicht. Ergänzend oder alternativ kann vorgesehen sein, dass das Energiesparsignalmuster derart ausgebildet ist, dass durch gezielte Ansteuerung von Ventilmodulen 3 und/oder elektrischen Modulen 4 zunächst ein vorgebbarer Zustand der damit gekoppelten Aktoren 12 und/ oder Sensoren 17, 18 eingestellt wird und erst in einem anschließenden Schritt eine Druckreduzierung in den zugeordneten Ventilmodulgruppen 9, 10 herbeigeführt wird.

Die unterschiedlichen Energiesparsignalmuster können sich ergänzend oder alternativ sowohl hinsichtlich der Anzahl und/oder Verteilung der hierdurch angesprochenen Module 2 der Modulanordnung 1 als auch hinsichtlich der von den Drucksteuermitteln 23, 24 einzustellenden Druckniveaus unterscheiden. Zudem kann vorgesehen sein, die Modulanordnung durch eine entsprechende Abfolge von Energiesparsignalen mit Hilfe der Steuereinrichtung 5 zunächst in einen Energiesparzustand mit geringfügig reduzierten Fluidverbrauch und in einem zweiten Schritt in einen zweiten Energiesparzustand mit einem deutlich verringerten Fluidverbrauch zu verbringen.

Die Steuereinrichtung 5 kann zudem dazu eingerichtet sein, die über das Bussystem 8 von der Maschinensteuerung 7 eintreffenden Anweisungen zu analysieren und beispielsweise anhand der im vorgegebenen Busprotokoll vorgesehenen Prüfroutinen auf Plausibilität zu überprüfen. Im Fall von Störungen in der Maschinensteuerung 7 oder im Bussystem 8 kann die Steuereinrichtung 5 ein Fehlerfallsingalmuster freigeben, um die Module 2 sowie die an die Module 2 angeschlossenen elektrischen und/oder pneumatischen Komponenten in kurzer Zeit in einen gesicherten Zustand zu bringen. Zu diesem Zweck kann ebenfalls eine Ansteuerung der Drucksteuermittel 23, 24 sowie gegebenenfalls der Ventilmodule 3 und/oder der elektrischen Module 4 vorgesehen sein. Im Unterscheid zum Energiesparzustand ist jedoch das Ziel beim Sicherheitszustand darin zu sehen, dass die Modulanordnung 1 und die daran angeschlossenen Komponenten möglichst rasch in den Sicherheitszustand gebracht werden, um Gefährdungen zu minimieren. Ein Energieverbrauch, insbesondere ein Druckluftverbrauch und/oder elektrischer Stromverbrauch, ist beim Sicherheitszustand im Gegensatz zum Energiesparzustand kein vordringliches Optimierungskriterium.

Bei Eintreffen eines Aktivierungssignals, das von der Maschinensteuerung 7 über das Bussystem 8 an die Steuereinrichtung 5 übertragen wird, kann ein in der Steuereinrichtung 5 abgelegtes Aktivierungs-Signalmuster abgerufen werden, mit dessen Hilfe der Betriebszustand der Modulanordnung 1 und der angeschlossenen Komponenten ausgehend von Energiesparzustand oder vom Sicherheitszustand wieder hergestellt wird. Alternativ werden von der Maschinensteuerung 7 Anweisungen zu selektiven Aktivierung der Module 2 über das Bussystem 8 bereitgestellt.

## Patentansprüche

1. Modulanordnung mit längs einer Reihenrichtung (6) aneinandergereihten Modulen (2), die wenigstens teilweise als Ventilmodule (3) ausgebildet sind, sowie mit einer Steuereinrichtung (5), die zur Kommunikation mit einer Maschinensteuerung (7) über ein Bussystem (8) und zur Bereitstellung von Steuersignalen an die Module (2) ausgebildet ist, wobei die Ventilmodule (3) in wenigstens zwei Ventilmodulgruppen (9, 10, 11) zusammengefasst sind und wenigstens einer Ventilmodulgruppe (9, 10) ein Drucksteuermittel (23, 24) zugeordnet ist, das in Abhängigkeit von einem Steuersignal der Steuereinrichtung (5) zwischen einem ersten und wenigstens einem zweiten Druckniveau umschaltbar ist, um eine Druckbeaufschlagung der zugeordneten Ventilmodulgruppe (9, 10) zu beeinflussen, **dadurch gekennzeichnet, dass** in der Steuereinrichtung wenigstens ein Energiesparsignalmuster für eine Umschaltung wenigstens eines Drucksteuermittels (23, 24) aus einem Betriebszustand in einen Energiesparzustand gespeichert ist.

2. Modulanordnung nach Anspruch 1, **dadurch gekennzeichnet, dass** in der Steuereinrichtung (5) wenigstens ein Fehlerfallsignalmuster für eine Umschaltung wenigstens eines Drucksteuermittels (23, 24) aus einem Betriebszustand in einen Sicherheitszustand gespeichert ist.

3. Modulanordnung nach Anspruch 2, **dadurch gekennzeichnet, dass** wenigstens ein Energiesparsignalmuster und/oder wenigstens ein Fehlerfallsignalmuster Steuersignale zur Ansteuerung von Ventilmodulen (3) und/oder elektrischen Modulen (4) umfasst, um diese aus einem Betriebszustand in einen Energiesparzustand oder in einen Sicherheitszustand umzuschalten.

4. Modulanordnung nach Anspruch 2 oder 3, **dadurch gekennzeichnet, dass** die Steuereinrichtung derart für eine Auswertung von Anweisungen des Bussystems (8) ausgebildet ist, dass bei Eintreffen eines Energiesparsignals eine Bereitstellung eines Energiesparsignalmusters und/oder bei Detektion von Kommunikationsstörungen im Bussystem (8) eine Bereitstellung des Fehlerfallsignalmusters an wenigstens ein Modul (2), insbesondere ein Drucksteuermittel (23, 24), bewirkt wird.

5. Modulanordnung nach einem der vorhergehenden Ansprüche, **dadurch gekennzeichnet, dass** die Steuereinrichtung (5) zur Kommunikation mit einer Maschinensteuerung (7) mittels eines Ethernet-basierten Bussystems (8), vorzugsweise eines Bussystems (8) gemäß IEC 61784-2, insbesondere Profinet, ausgebildet ist.

6. Modulanordnung nach einem der vorhergehenden Ansprüche, **dadurch gekennzeichnet, dass** das Drucksteuermittel (23, 24) als Modul (2) zur Aufreihung an die Ventilmodulgruppe (9, 10, 11) ausgebildet ist.

7. Modulanordnung nach einem der vorhergehenden Ansprüche, **dadurch gekennzeichnet, dass** die einer Ventilmodulgruppe (9, 10, 11) zugeordneten Ventilmodule (3) jeweils unmittelbar nebeneinander angeordnet sind.

8. Modulanordnung nach einem der vorhergehenden Ansprüche, **dadurch gekennzeichnet, dass** benachbarte Ventilmodulbaugruppen (9, 10, 11) jeweils durch ein Drucksteuermittel (23, 24) baulich voneinander getrennt sind.

9. Verfahren zum Betreiben einer Modulanordnung (1), insbesondere nach einem der vorhergehenden Ansprüche, **gekennzeichnet durch** die Schritte: Auswerten von Anweisungen, die von einer Maschinensteuerung (7) über ein Bussystem (8) bereitgestellt werden, **durch** eine Steuereinrichtung (5) und Ansteuerung von Modulen (2), insbesondere Ventilmodulen (3), die zu wenigstens zwei Ventilmodulgruppen (9, 10, 11) zusammengefasst sind, **durch** die Steuereinrichtung (5), wobei wenigstens einer Ventilmodulgruppe (9, 10, 11) ein Drucksteuermittel (23, 24) zugeordnet ist, das in Abhängigkeit von einem Steuersignal der Steuereinrichtung (5) zwischen einem ersten und wenigstens einem zweiten Druckniveau umschaltbar ist, Detektieren eines über das Bussystem (8) bereitgestellten Energiesparsignals und Ansteuern des wenigstens einen Drucksteuermittels (23, 24) mittels eines Energiesparsignalmusters bei Vorliegen des Energiesparsignals, um für wenigstens eine Ventilmodulgruppe (9, 10, 11) eine Absenkung des Fluiddrucks und somit einen Energiesparzustand herbeizuführen, Detektieren von Fehlfunktionen des Bussystems (8) und Ansteuern des wenigstens einen Drucksteuermittels (23, 24) mittels eines Fehlerfallsignalmusters bei Vorliegen einer Bussystemfehlfunktion, um für wenigstens eine Ventilmodulgruppe (9, 10, 11) eine Absenkung eines Fluiddrucks und somit einen Sicherheitszustand herbeizuführen.

10. Verfahren nach Anspruch 9, **dadurch gekennzeichnet, dass** das Energiesparsignal als vorgebbares Triggersignal, vorzugsweise als vorgebbares Datenwort, insbesondere als vorgebbares Datenbit innerhalb eines Datenworts, über das Bussystem (8) übertragen wird und die Freigabe des wenigstens einen Energiesparsignalmusters durch die Steuereinrichtung (5) bewirkt.

11. Verfahren nach Anspruch 9 oder 10, **dadurch gekennzeichnet, dass** durch das Energiesparsignalmuster und/oder durch das Fehlerfallsignalmuster Steuersignale an die Ventilmodule (3) und/oder die elektrischen Module (4) ausgegeben werden, um für den Energiesparzustand bzw. den Sicherheitszustand vorgebbare Ventilstellungen der Ventilmodule (3) und/oder Schaltzustände der elektrischen Module (4) einzustellen.

12. Verfahren nach Anspruch 9, 10 oder 11, **dadurch gekennzeichnet, dass** für den Betriebszustand der Module (2) über das Bussystem (8) gemäß einem vorgebbaren Busprotokoll Anweisungen für eine diskrete Ansteuerung individueller Module (2), insbesondere Ventilmodule (3) und/oder elektrische Module (4), übertragen werden.

## Claims

1. Module arrangement comprising modules (2) lined up along a direction of a row (6) and at least partially represented by valve modules (3), and further comprising a control unit (5) designed for communication with a machine control (7) via a bus system (8) and for the provision of control signals to the modules (2), wherein the valve modules (3) are composed of at least two valve module groups (9, 10, 11) and least one valve module group (9, 10) is assigned a pressure control means (23, 24) which, as a function of a control signal of the control unit (5), can be switched between a first and at least one second pressure level in order to influence an application of pressure to the associated valve module group (9, 10), **characterised in that** at least one energy saving signal pattern for a switchover of at least one pressure control means (23, 24) from an operating state to an energy saving state is stored in the control unit.

2. Module arrangement according to claim 1, **characterised in that** at least one fault case signal pattern for a switchover of at least one pressure control means (23, 24) from an operating state to a safety state is stored in the control unit (5).

3. Module arrangement according to claim 2, **characterised in that** that at least one energy saving signal pattern and/or at least one fault case signal pattern comprise(s) control signals for the selection of valve modules (3) and/or electric modules (4) for switching them from an operating state to an energy saving state or to a safety state.

4. Module arrangement according to claim 2 or 3, **characterised in that** the control unit is designed for an evaluation of instructions of the bus system (8) in such a way that, on the arrival of an energy saving signal, a provision of an energy saving signal pattern is effected and/or, on the detection of communication faults in the bus system (8), a provision of a fault case signal pattern is effected to at least one module (2), in particular a pressure control means (23, 24).

5. Module arrangement according to any of the preceding claims, **characterised in that** the control unit (5) is designed for communication with a machine control (7) by means of an Ethernet-based bus system (8), preferably a bus system (8) according to IEC 61784-2, in particular Profinet.

6. Module arrangement according to any of the preceding claims, **characterised in that** the pressure control means (23, 24) is designed as a module (2) suitable for lining up with the valve module group (9, 10, 11).

7. Module arrangement according to any of the preceding claims, **characterised in that** the valve modules (3) assigned to a valve module group (9, 10, 11) are arranged immediately adjacent to one another.

8. Module arrangement according to any of the preceding claims, **characterised in that** adjacent valve module groups (9, 10, 11) are structurally separated from one another by a pressure control means (23, 24) each.

9. Method for operating a module arrangement (1), in particular according to any of the preceding claims, **characterised by** the steps of: the evaluation of instructions provided by a machine control (7) via a bus system (8) by a control unit (5) and the selection of modules (2), in particular valve modules (3), which are composed of at least two valve module groups (9, 10, 11) by the control unit (5), wherein at least one valve module group (9, 10) is assigned a pressure control means (23, 24) which, as a function of a control signal of the control unit (5), can be switched between a first and at least one second pressure level, the detection of an energy saving signal provided via the bus system (8) and, in the presence of the energy saving signal, the selection of the at least one pressure control means (23, 24) by means of an energy saving signal pattern in order to cause a reduction of the fluid pressure and thus an energy saving state for at least one valve module group (9, 10, 11), the detection of malfunctions of the bus system (8) and the selection of the at least one pressure control means (23, 24) by means of a fault case signal pattern in the presence of a bus system malfunction in order to cause a reduction of the fluid pressure and thus a safety state for at least one valve module group (9, 10, 11).

10. Method according to claim 9, **characterised in that** the energy saving signal is transmitted as a presettable trigger signal, preferably as a presettable data word, in particular as a presettable data bit within a data word, via the bus system (8) and effects the enabling of the at least one energy saving signal pattern by the control unit (5).

11. Method according to claim 9 or 10, **characterised in that** control signals are output to the valve modules (3) and/or to the electric modules (4) by the energy saving signal pattern and/or by the fault case signal pattern in order to set valve positions of the valve modules (3) and/or switching states of the electric modules (4) which are presettable for the energy saving state or the safety state respectively.

12. Method according to claim 9, 10 or 11, **characterised in that** for the operating state of the modules (2) instructions are transmitted via the bus system (8) in accordance with a presettable bus protocol for a discrete selection of individual modules (2) in particular valve modules (3) and/or electric modules (4).

## Revendications

1. Ensemble de modules comprenant des modules (2) alignés les uns à côté des autres le long d'une direction d'alignement (6), lesquels sont réalisés au moins en partie sous la forme de modules de soupape (3), et comprenant également un dispositif de commande (5), qui est réalisé aux fins de la communication avec une commande de machine (7) par l'intermédiaire d'un système de bus (8) et aux fins de la fourniture aux modules (2) de signaux de commande, sachant que les modules de soupape (3) sont rassemblés en au moins deux groupes de modules de soupape (9, 10, 11) et qu'un moyen de commande de pression (23, 24) est associé au moins à un groupe de modules de soupape (9, 10), lequel moyen de commande de pression peut être commuté, selon un signal de commande du dispositif de commande (5), entre un premier niveau de pression et au moins un deuxième niveau de pression afin d'influer sur la pression à l'action de laquelle est soumis le groupe de modules de soupape (9, 10) associé, **caractérisé en ce qu'**au moins un modèle de signal d'économie d'énergie pour une commutation d'au moins un moyen de commande de pression (23, 24) depuis un mode de fonctionnement dans un mode d'économie d'énergie est enregistré dans le dispositif de commande.

2. Ensemble de modules selon la revendication 1, **caractérisé en ce qu'**au moins un modèle de signal de cas de défaillance pour une commutation d'au moins un moyen de commande de pression (23, 24) depuis un mode de fonctionnement dans un mode de sécurité est enregistré dans le dispositif de commande (5).

3. Ensemble de modules selon la revendication 2, **caractérisé en ce qu'**au moins un modèle de signal d'économie d'énergie et/ou au moins un modèle de signal de cas de défaillance comportent des signaux de commande servant à commander des modules de soupape (3) et/ou des modules électriques (4) afin de commuter ces derniers depuis un mode de fonctionnement dans un mode d'économie d'énergie ou dans un mode de sécurité.

4. Ensemble de modules selon la revendication 2 ou 3, **caractérisé en ce que** le dispositif de commande est réalisé de telle manière pour une analyse d'instructions du système de bus (8) qu'une fourniture d'un modèle de signal d'économie d'énergie est provoquée lors de l'arrivée d'un signal d'économie d'énergie et/ou qu'une fourniture du modèle de signal de cas de défaillance est provoquée lors de la détection de défauts de communication dans le système de bus (8) à au moins un module (2), en particulier à un moyen de commande de pression (23, 24).

5. Ensemble de modules selon l'une quelconque des revendications précédentes, **caractérisé en ce que** le dispositif de commande (5) est réalisé aux fins de la communication avec une commande de machine (7) au moyen d'un système de bus (8) basé Ethernet, de préférence au moyen d'un système de bus (8) selon la norme IEC 61784-2, en particulier d'un système Profinet.

6. Ensemble de modules selon l'une quelconque des revendications précédentes, **caractérisé en ce que** le moyen de commande de pression (23, 24) est réalisé sous la forme d'un module (2) destiné à être aligné avec le groupe de modules de soupape (9, 10, 11).

7. Ensemble de modules selon l'une quelconque des revendications précédentes, **caractérisé en ce que** les modules de soupape (3) associés à un groupe de modules de soupape (9, 10, 11) sont disposés respectivement directement les uns à côté des autres.

8. Ensemble de modules selon l'une quelconque des revendications précédentes, **caractérisé en ce que** des groupes structurels de modules de soupape (9, 10, 11) adjacents sont respectivement séparés les uns des autres d'un point de vue structurel par un moyen de commande de pression (23, 24).

9. Procédé servant à faire fonctionner un ensemble de modules (1), en particulier selon l'une quelconque des revendications précédentes, **caractérisé par** les étapes qui suivent consistant à : analyser au moyen d'un dispositif de commande (5) des instructions, qui sont fournies par une commande de machine (7) par l'intermédiaire d'un système de bus (8) et commander au moyen du dispositif de commande (5) des modules (2), en particulier des modules de soupape (3), qui sont rassemblés pour former au moins deux groupes de modules de soupape (9, 10, 11), sachant qu'un moyen de commande de pression (23, 24) est associé à au moins un groupe de modules de soupape (9, 10, 11), lequel moyen de commande de pression peut être commuté, selon un signal de commande du dispositif de commande (5), entre un premier niveau de pression et au moins un deuxième niveau de pression ; détecter un signal d'économie d'énergie fourni par l'intermédiaire du système de bus (8) et commander le moyen de commande de pression (23, 24) au moins au nombre de un au moyen d'un modèle de signal d'économie d'énergie en présence d'un signal d'économie d'énergie pour entraîner pour au moins un groupe de modules de soupape (9, 10, 11) une baisse de la pression de fluide et ainsi un mode d'économie d'énergie ; détecter des dysfonctionnements du système de bus (8) et commander le moyen de commande de pression (23, 24) au moins au nombre de un au moyen d'un modèle de signal de cas de défaillance en présence d'un dysfonctionnement du système de bus pour entraîner pour au moins un groupe de modules de soupape (9, 10, 11) une baisse d'une pression de fluide et donc un mode de sécurité.

10. Procédé selon la revendication 9, **caractérisé en ce que** le signal d'économie d'énergie est transféré sous la forme d'un signal déclencheur pouvant être prédéfini, de préférence sous la forme d'un mot de données pouvant être prédéfini, en particulier sous la forme d'un bit de données pouvant être prédéfini à l'intérieur d'un mot de données, par l'intermédiaire du système de bus (8) et entraîne l'activation du modèle de signal d'économie d'énergie au moins au nombre de un par le dispositif de commande (5).

11. Procédé selon la revendication 9 ou 10, **caractérisé en ce que** des signaux de commande sont délivrés aux modules de soupape (3) et/ou aux modules électriques (4) par le modèle de signal d'économie d'énergie et/ou par le modèle de signal de cas de défaillance, afin de régler des positions de soupape, pouvant être prédéfinies, des modules de soupape (3) et/ou des modes de commutation des modules électriques (4) pour le mode d'économie d'énergie ou pour le mode de sécurité.

12. Procédé selon la revendication 9, 10 ou 11, **caractérisé en ce que** des instructions pour une commande discrète de modules individuels (2), en particulier de modules de soupape (3) et/ou de modules électriques (4), sont transférées pour le mode de fonctionnement des modules (2) par l'intermédiaire du système de bus (8) selon un protocole de bus pouvant être prédéfini.
